# EUROPÄISCHE PATENTSCHRIFT

(11) **EP 0 940 078 B1**
(45) Veröffentlichungstag und Bekanntmachung des Hinweises auf die Patenterteilung: **16.06.2004**
(21) Anmeldenummer: 99104139.3
(22) Anmeldetag: 02.03.1999
(51) Int. Cl.: A01K 61/00

(54) **Verfahren und Vorrichtung zur Ermittlung der Wanderzeiten von Fischen**
Method and device for determining the migration times of fish
Methode et appareil pour déterminer les temps de migration des poissons

(30) Priorität: 05.03.1998 DE 19810165
(43) Veröffentlichungstag der Anmeldung: 08.09.1999
(73) Patentinhaber: Adam, Beate Dr., 36326 Antrifttal (DE); Dumont, Ulrich Dipl.-Ing., 52134 Herzogenrath (DE); Kessels, Norbert, 52477 Alsdorf (DE); Schwevers, Ulrich Dr., 36326 Antrifttal (DE)
(72) Erfinder: Adam, Beate Dr., 36326 Antrifttal (DE); Dumont, Ulrich Dipl.-Ing., 52134 Herzogenrath (DE); Kessels, Norbert, 52477 Alsdorf (DE); Schwevers, Ulrich Dr., 36326 Antrifttal (DE)
(74) Vertreter: Bauer, Dirk, Dipl.-Ing. Dipl.-Kfm.

(56) Entgegenhaltungen:
- GB-A- 2 311 452
- US-A- 2 121 787
- US-A- 3 128 744
- US-A- 4 392 236
- US-A- 4 970 988
- US-A- 5 211 129

## Beschreibung

Wasserkraftwerke gelten gemeinhin als ökologisch verträgliche Form der Energiegewinnung, insbesondere der Stromerzeugung, da hiermit regenerative Energiequellen genutzt werden und keine CO₂-Emissionen auftreten. Allerdings stehen diesem Umstand nicht unerhebliche gewässerökologische Beeinträchtigungen entgegen, die bisher nur teilweise durch eine entsprechende ökotechnische Optimierung von Wasserkraftwerken gemildert werden konnten. Der nachhaltige Rückgang gewisser Fischbestände bis hin zum Aussterben ganzer Populationen resultiert neben anderen Veränderungen der Gewässer (Verschmutzung, naturferner Ausbau usw.) aus der Unterbrechung der Wanderwege von Fischen durch unpassierbare Staubauwerke. So sind beispielsweise die jährlich vor allem in den Herbst- und Wintermonaten abwandernden sogenannten katadromen Wanderfische essentiell darauf angewiesen, von ihren Nahrungsbiotopen in Flüssen des Binnenlandes an die Laichplätze im Meer zu wandern. Aufgrund ihrer Körperform und -länge sind sie beim Passieren der Turbinen von Wasserkraftwerken besonders gefährdet. Auch die derzeit laufenden Wiederansiedelungsprogramme für Lachse werden nur dann erfolgreich sein, wenn ihr Abstieg ins Meer gesichert werden kann.

Während der Stand der Technik von Fischaufstiegsanlagen in der Vergangenheit wesentlich weiterentwickelt werden konnte, wurde das Problem der flußabwärts gerichteten Wanderung von Fischen bisher stark vernachlässigt. Obgleich seit mehr als 100 Jahren bekannt ist [vgl. EICHER, G.J. (1987): Turbine-related fish mortality: review and evaluation of studies. EPRI AP-5480, Project 2694-4, Final Report, Portland/Oregon; MONTEN, E. (1985): Fish and turbines - Fish injuries during passage through power station turbines - Stockholm], daß durch die Turbinen bzw. Rechenanlagen von Wasserkraftwerken Fische in beträchtlichem Umfang geschädigt und getötet werden, existieren bis heute lediglich extrem aufwendige Anlagen, die das Eindringen von Fischen in die Kraftwerke bzw. ihre Schädigung an Rechenanlagen wirksam verhindern können. Verschiedentlich eingebaute Schutzvorrichtungen, wie beispielsweise Elektroscheuchanlagen, Quecksilberdampflampen, Stroboskoplicht usw. haben sich bei Überprüfungen jeweils als nicht funktionsfähig erwiesen. Beim Einbau von Einlaufrechen mit einem Stababstand von 20 mm wurde das Problem der Fischschädigung lediglich von der Turbine in den Rechen vorverlagert, was unter anderem daran liegt, daß alternative Abwanderungswege für die Fische nicht zur Verfügung stehen oder von diesen nicht aufgefunden wurden.

Vor diesem Hintergrund stellt sich die Frage nach einer Möglichkeit zur Früherkennung der Wanderzeiten insbesondere abwandernder Fischarten, um mit einer gezielten Steuerung von Wasserentnahmebauwerken oder -kraftwerksanlagen auf die Wanderung zu reagieren und die Schädigung der Fische, zum Beispiel durch Drosselung der Kraftwerke oder Absenken der Wehre, zu reduzieren. Ein entscheidender Grund dafür, daß derartige Früherkennungssysteme noch nicht entwickelt wurden, liegt an der Schwierigkeit der Erkennung und Beobachtung von Fischen unter Freilandbedingungen. So scheitern Versuche zum Einsatz optischer Systeme an der Trübung der Fließgewässer sowie den Dimensionen der zu überwachenden Querschnitte. Andererseits erlauben akustische Systeme, wie Sonar und Echolote, weder eine artspezifische Kennung noch eine Unterscheidung der Fische von unbelebten Objekten, wie zum Beispiel Treibgut.

Der Erfindung liegt die Aufgabe zugrunde, ein Verfahren vorzuschlagen, mit dem die Zeiträume der Auf- und Abwanderung von Fischen mit vergleichsweise einfachen Mitteln zuverlässig bestimmt werden können, um in Abhängigkeit von dem Ergebnis der Wanderzeitbestimmung die Betriebsweise von Wasserentnahmebauwerken und -kraftwerksanlagen beeinflussen zu können.

Erfindungsgemäß wird diese Aufgabe durch ein Verfahren zur Ermittlung der Wanderzeiten von Fischen, während der die Fische aus einem Fließgewässersystem des Binnenlandes in Richtung des Meeres abwandern oder aus dem Meer in ein Fließgewässersystem aufsteigen, gelöst, das die folgenden Verfahrensmerkmale aufweist:
a) Eine bestimmte Anzahl der Fische wird in einem abgegrenzten Wasservolumen gehalten, in dem sich diese artgerecht verhalten und aus dem diese nicht entweichen können.
b) Mit einer Erfassungseinrichtung wird die Position jedes Fisches wiederholt ermittelt.
c) Aus der zeitlichen Abfolge der Positionsdaten wird mittels einer mit der Erfassungseinrichtung verbundenen Auswerteeinrichtung periodisch ein aktuelles Aktivitätsmuster der Fischbewegungen berechnet und fortlaufend mit einem gespeicherten Ruhemuster verglichen, das während einer Nicht-Wanderphase der Fische artspezifisch bestimmt worden ist.
d) Im Fall einer hinreichend großen Abweichung des aktuellen Aktivitätsmusters von dem Ruhemuster wird von der Auswerteeinrichtung ein Signal abgegeben, das eine Wanderzeit anzeigt.

Das erfindungsgemäße Verfahren basiert auf der Erkennung signifikanter Aktivitätsänderungen der artgerecht gehälterten Fische, die für die in dem betreffenden Fließgewässersystem frei lebenden Fische repräsentativ sind. Es hat sich herausgestellt, daß bei potentiell wanderwilligen Fischen Aktivitätssteigerungen zu beobachten sind, die als prämigratorische Unruhe beschrieben wird. Das Verfahren macht sich dabei den Umstand zunutze, daß die in einem abgegrenzten Wasservolumen gehaltene begrenzte Anzahl von Fischen dieselben Verhaltensmuster zeigt wie die in einem interessierenden Fließgewässersystem frei lebenden Fische, sofern zwischen dem abgegrenzten Wasservolumen und einem Fließgewässer des zu überwachenden Fließwassersystems ein gewisser räumlicher Zusammenhang besteht. Vorzugsweise enthält das abgegrenzte Volumen Wasser aus dem zu überwachenden Fließgewässer.

Das erfindungsgemäße Verfahren bietet dabei den Vorteil, daß seine Durchführung sehr einfach ist, da das zu überwachende Wasservolumen nicht übermäßig groß sein muß und die Anzahl der zu überwachenden Fische ebenfalls begrenzt sein kann.

Mit dem erfindungsgemäßen Verfahren wird somit die Möglichkeit geschaffen, ein von der subjektiven Beobachtung des Menschen unabhängiges Biomonitoring-System im vollautomatischen Betrieb aufzubauen, das zur Zeit der Fischwanderung ein eindeutiges Signal aus der Bewegung der markierten und in dem abgegrenzten Wasservolumen gehaltenen Fische liefert. Eine Überwachung der tatsächlichen Lebensräume der frei lebenden Fische, die einerseits extrem aufwendig und andererseits dennoch recht unzuverlässig wäre, ist aufgrund der Erfindung entbehrlich.

Es ist des weiteren von Vorteil, wenn die in dem Wasservolumen gehälterten Fische jeweils mit einem Erkennungselement versehen sind, das die natürliche Bewegung der Fische nicht einschränkt und die individuelle Erkennung jedes derart markierten Fisches erlaubt, wobei die Erfassungseinrichtung auf die Erkennungselemente abgestimmt ist.

Gemäß einer Ausgestaltung des erfindungsgemäßen Verfahrens wird vorgeschlagen, daß das Wasservolumen von Wasser aus dem Fließgewässer, für dessen zugehöriges Fließgewässersystem die Wanderzeiten ermittelt werden sollen, durchströmt wird. Auf diese Weise kann die Korrelation zwischen den ermittelten und den tatsächlichen Wanderzeiten verbessert werden.

Eine weitere Verbesserung der Korrelation läßt sich auch dadurch erzielen, daß das Wasservolumen von einem Käfig begrenzt wird, der sich innerhalb des Strömungsquerschnitts des Fließgewässers befindet, für dessen zugehöriges Fließgewässersystem die Wanderzeiten ermittelt werden sollen. Auf diese Weise können für die in dem abgegrenzten Wasservolumen gehaltenen Fische hinsichtlich dessen Qualität (Temperatur, Sauerstoffgehalt, pH-Wert usw.) übereinstimmende Lebensbedingungen geschaffen werden.

Die Erfindung weiter ausgestaltend wird vorgeschlagen, daß als Erkennungselemente Transponder und als Erfassungseinrichtung eine Mehrzahl von Antennen verwendet werden. Bei den aus dem Stand der Technik allgemein bekannten Transpondern handelt es sich um passive mikroelektronische Bauteile. Die Signalübertragung basiert auf dem Prinzip der elektromagnetischen Induktion. Die in Verbindung mit der Kennzeichnung von Fischen zu verwendenden Transponder weisen beispielsweise die Form eines Zylinders auf, wobei der Durchmesser ca. 2 mm und die Länge ca. 12 mm beträgt. Der Transponder läßt sich mit Hilfe eines Injektors vorzugsweise hinter dem Kopfansatz und parallel zur Längsachse des Fischs unter dessen Haut injizieren. Jeder Transponder ist steril in einer eigenen Injektionskanüle verpackt, wodurch die Gefahr von Infektionen praktisch ausgeschlossen wird. Die Injektion des Transponders in einen Fisch benötigt nur wenige Sekunden.

Die vorzugsweise mit Bioglas ummantelten passiven Transponder tragen einen zehnstelligen alphanumerischen Code, der vom Hersteller jeweils nur einmal vergeben wird. Die Anzahl der möglichen Code-Kombinationen ist mit fast fünf Milliarden Möglichkeiten nahezu unbegrenzt, wodurch eine individuelle Markierung jedes Fisches garantiert ist.

Von den zugehörigen Antennen wird ein niederfrequentes magnetisches Feld erzeugt, das die in seiner Reichweite befindlichen Transponder aktiviert. Passive Transponder benötigen somit keine eigene Energiequelle und sind daher im Gegensatz zum Beispiel zu aktiven telemetrischen Sendern zeitlich unbegrenzt funktionsfähig. Der durch das magnetische Feld der Antenne aktivierte Transponder sendet einen individuellen Identifikationscode aus, der wiederum von der Antenne empfangen und durch eine nachgeschaltete Auswerteeinheit decodiert werden kann. Die bei dem erfindungsgemäßen Verfahren zu verwendenden Antennen weisen vorzugsweise eine Rahmenform auf, so daß die Registierung eines mit einem Transponder gekennzeichneten Fisches bei jedem Durchschwimmen der Rahmenantenne erfolgt.

Alternativ zu der vorbeschriebenen Transponder-Technologie lassen sich die Fischbewegungen auch dadurch erfassen, daß als Erkennungselemente Radiosender und als Empfangseinrichtung mindestens eine Antenne verwendet wird.

Eine weitere Alternative besteht darin, daß als Erkennungselement äußerlich an jeweils einem Fisch befestigte Markierungen und optische Erfassungseinrichtungen verwendet werden. Vorteilhafterweise wird ein videogestütztes Überwachungssystem angewendet.

Ferner wird vorgeschlagen, daß von der Auswerteeinrichtung bei dem Berechnungsvorgang chemisch-physikalische Parameter des Wassers (wie z.B. pH-Wert, Sauerstoffgehalt, Temperatur, Strömungsgeschwindigkeit usw.) berücksichtigt werden, die mittels geeigneter Sensoren erfaßt werden. Hierdurch kann die Zuverlässigkeit des Früherkennungssystems weiter gesteigert werden.

Eine Weiterbildung des Verfahrens besteht ferner darin, daß von der Auswerteeinrichtung bei dem Berechnungsvorgang die Jahreszeit und die Mondphase berücksichtigt werden, da bei bestimmten Konstellationen der vorgenannten Größen vermehrt mit einer Wanderungsaktivität gerechnet werden muß und daher auch bei geringeren Abweichungen von dem Ruhemuster auf eine beginnende Wanderung geschlossen werden kann.

Eine Alternative besteht ferner darin, daß die Erkennungselemente äußerlich an jedem Fisch befestigte Markierungen sind und eine optische Erfassungseinrichtung vorgesehen ist.

Bei Verwendung einer optischen Erfassungseinrichtung, beispielsweise in Form einer oder mehrerer Videokameras, vorzugsweise mit digitaler Bilderkennung, kann auf eine Markierung der Fische mit Erkennungselementen je nach Anwendungsfall verzichtet werden.

Ein alternatives, die zugrundeliegende Aufgabe ebenfalls lösendes Verfahren weist die folgenden Merkmale auf
a) Eine bestimmte Anzahl der Fische wird in einem abgegrenzten Wasservolumen gehalten, in dem sich diese artgerecht verhalten und aus dem diese nicht entweichen können.
b) In einem bestimmten Bereich des Wasservolumens wird die von Fischen hervorgerufene Schwerkraftwirkung mittels einer gravimetrisch arbeitenden Erfassungseinrichtung erfaßt.
c) Im Falle einer hinreichend großen Schwerkraftwirkung auf die Erfassungseinrichtung wird ein Signal abgegeben, das eine Wanderzeit anzeigt.

Bei diesem statischen Verfahren kann auf die Bestimmung von Bewegungsmustern und einem Vergleich mit einem Ruhemuster verzichtet werden. Es wird lediglich die Konzentration der Fische im Bereich der Erfassungseinrichtung erfaßt, die als Indiz für die Wanderbereitschaft anzusehen ist. So hat es sich herausgestellt, daß insbesondere Aale sich in einem bestimmten Bereich des Volumens zurückziehen, so beispielsweise eine in einem Behälter befindliche Schräge "hinaufklettern" und sich dort längere Zeit aufhalten. Da die Dichte der Aale größer als die des Wassers ist, läßt sich im Bereich der Fischkonzentration eine meßbare Schwerkraftwirkung feststellen, die ein Zeichen für die Wanderbereitschaft ist.

Gemäß der Erfindung wird des weiteren eine Vorrichtung zur Ermittlung der Wanderzeiten von Fischen, während der die Fische aus einem Fließgewässersystem des Binnenlandes in Richtung des Meeres abwandern oder aus dem Meer in ein Fließgewässersystem aufsteigen, vorgeschlagen. Die Vorrichtung besteht aus
a) einer ein Wasservolumen definierenden, in sich geschlossenen Abgrenzungseinrichtung, die für die Fische nicht durchdringbar ist und in der eine bestimmte Anzahl von Fischen derart unterbringbar ist, daß diese sich in artgerechter Weise verhalten können,
b) mindestens einer auf die physikalischen Eigenschaften der Fische abgestimmten Erfassungseinrichtung, mit der die Positionen der Fische in der Abgrenzungseinrichtung wiederholt ermittelbar sind,
c) einer mit der Erfassungseinrichtung verbindbaren Auswerteeinrichtung, mit der aus der zeitlichen Abfolge der Positionsdaten der Fische periodisch ein aktuelles Aktivitätsmuster der Fischbewegungen berechenbar ist, wobei fortlaufend zwischen dem aktuellen Aktivitätsmuster und einem Ruhemuster, das während einer Nicht-Wanderphase der Fische bestimmt worden ist, ein Vergleich durchführbar ist und wobei des weiteren von der Auswerteeinrichtung im Fall einer hinreichend großen Abweichung des aktuellen Aktivitätsmusters von dem Ruhemuster ein Signal abgebbar ist, das eine Wanderzeit anzeigt.

Mit vergleichsweise einfachen Mitteln läßt sich somit das erfindungsgemäße Verfahren durchführen. Ein Vorteil der Vorrichtung besteht darin, daß diese für einen vollautomatischen Betrieb geeignet ist, das heißt die Ermittlung der Wanderzeiten ist von der subjektiven Beobachtung von Menschen völlig unabhängig.

Vorzugsweise können die Fische mit Erkennungselementen versehen sein, an die die Erfassungseinrichtung angepaßt ist.

Eine Ausgestaltung der Vorrichtung besteht darin, daß die Abgrenzungseinrichtung ein Bekken ist, in dem sich Wasser aus einem Fließgewässer befindet, für dessen zugehöriges Fließgewässersystem eine Wanderzeit ermittelt werden soll.

Vorteilhafterweise befindet sich das Becken in der Nähe eines Fließgewässers, für dessen zugehöriges Fließgewässersystem eine Wanderzeit ermittelt werden soll, und ist ständig von Wasser dieses Fließgewässers durchströmbar. Aufgrund der Schaffung weitgehend identischer Lebensbedingungen für die gehaltenen markierten Fische und die in diesem Fließgewässersystem frei lebenden Fische wird eine hohe Zuverlässigkeit des Früherkennungssystems gewährleistet.

Alternativ hierzu kann die Abgrenzungseinrichtung auch als Käfig ausgebildet sein, der innerhalb des Strömungsquerschnitts eines Fließgewässers angeordnet ist, für dessen zugehöriges Fließgewässersystem eine Wanderzeit ermittelt werden soll. Eine weitgehende Übereinstimmung der Umgebungsbedingungen läßt sich auf diese Weise besonders einfach erzielen.

Die erfindungsgemäße Vorrichtung weiter ausgestaltend wird vorgeschlagen, daß die Erkennungselemente Transponder und die Erfassungseinrichtung Antennen sind. Ein besonderer Vorteil des Transponder-Systems liegt darin, daß es aufgrund seines passiven Funktionsprinzips zeitlich unbegrenzt funktionsfähig ist, sofern die Antennen eine Energieversorgung aufweisen.

Vorteilhafterweise bilden die Antennen jeweils eine Umrandung einer Öffnung und sind so innerhalb der Abgrenzungseinrichtung angeordnet, daß die Öffnungen von den Fischen durchschwimmbar sind.

Um ein möglichst zwangsläufiges Durchschwimmen der Antennen zu gewährleisten, wird vorgeschlagen, daß sich die Öffnungen innerhalb von Trennelementen befinden, die das von der Abgrenzungseinrichtung definierte Wasservolumen in mehrere Teilvolumina unterteilen. Bei jedem Wechsel von einem Teilvolumen in ein benachbartes muß ein Fisch somit die Antenne durchschwimmen und löst auf diese Weise seine Registrierung aus.

Bei hinreichend großer Empfindlichkeit der Antennen bzw. der damit zusammenwirkenden Transponder können die Antennen auch außerhalb der Abgrenzungseinrichtung, beipielsweise außerhalb eines in der Nähe des Fließgewässers angeordneten Beckens, angeordnet sein. Die Zugänglichkeit der Antennen kann auf diese Weise erleichtert werden. Des weiteren müssen die Antennen in diesem Fall nicht für einen Einsatz in Wasser geeignet sein. Aufgrund des größeren Abstands zwischen Erkennungselementen und den Antennen ist in diesem Fall eine hinreichend große Empfindlichkeit des Erfassungssystems sicherzustellen.

Außerdem wird alternativ zu dem Transpondersystem noch vorgeschlagen, daß die Erkennungselemente Radio sender sind und die Erfassungseinrichtung mindestens eine Antenne ist.

Ferner ist gemäß der Erfindung auch eine Vorrichtung möglich, bei der keine Erkennungselemente zur Markierung der Fische benötigt werden und eine auf die optischen Eigenschaften der Fische abgestimmte optische Erfassungseinrichtung zur Anwendung kommt. Dies kann beispielsweise eine Videokamera, vorzugsweise mit digitaler Bildverarbeitung, oder eine Fotozelle sein.

Alternativ kann die Erfassungseinrichtung auch einen Kondensator enthalten, mit dem die durch die Fischbewegungen verursachten Änderungen des elektrischen Feldes meßbar sind.

Des weiteren ist es vorstellbar, daß die Erfassungseinrichtung Schaltkontakte umfaßt, die durch sich bewegende Fische auslösbar sind. Dabei kann es sich um kapazitive Nährungsschalter oder um mechanische Mikroschalter handeln.

Schließlich ist nach der Erfindung auch eine Vorrichtung möglich, bei der die Wanderzeiten mittels gravimetrischer Effekte, hervorgerufen durch höhere Konzentration von Fischen, ermittelt werden.

Das erfindungsgemäße Verfahren wird nachfolgend anhand eines Ausführungsbeispiels einer Vorrichtung, die zu dessen Durchführung geeignet ist, näher beschrieben. Die Zeichnungsfigur zeigt in schematischer Darstellung einen Behälter zur Unterbringung von Fischen sowie andeutungsweise die damit verbundene Auswerteeinrichtung.

Ein quaderförmiger Behälter 1, z.B. nach Art eines Aquariums oder eines in der Fischereiwirtschaft gebräuchlichen Hälterbeckens, definiert ein davon umschlossenes abgegrenztes Wasservolumen. An einer Stirnseite 2 ist der Behälter 1 mit einer Eintrittsöffnung 3 versehen, durch die Wasser aus einem Fließgewässer in den vollständig mit Wasser gefüllten Behälter 1 einströmt. Auf der gegenüberliegenden Stirnseite 4 weist der Behälter 1 eine Austrittsöffnung 5 auf, durch die das austretende Wasser zurück zu dem Fließgewässer geleitet wird. Die Eintrittsöffnung 3 und die Austrittsöffnung 4 sind jeweils mit einem Gitter versehen, das ein Entweichen der in dem Behälter 1 gehaltenen Fische verhindert. Mit Hilfe von fünf Trennwänden 6 ist der Behälter in sechs gleich große Sektionen 7 unterteilt. Jede Trennwand 6 ist mit einer Öffnung 8 versehen, deren Umrandung von einer Antenne 9 gebildet wird.

In dem Behälter 1 ist eine Mehrzahl von Fischen 10 untergebracht, von denen jeder einzelne mit einem Transponder versehen ist, der im Hinterkopfbereich unter die Haut des Fisches injiziert ist. Eine derartige Transpondermarkierung stellt keinerlei Beeinträchtigung für den Fisch dar. Um die Lebensbedingungen für die Fische so natürlich wie möglich zu gestalten, kann der Boden 11 des Behälters 1 mit Kies bedeckt sein. Wenn die Oberseite 12 aus einem lichtdurchlässigen Material besteht, beispielsweise einer Glasscheibe oder einem Drahtgitter, kann der Boden 11 des Behälters 1 auch mit Wasserpflanzen versehen werden. Außerdem können in einzelnen Sektionen 7 des Behälters 1 auflockernde Gegenstände, wie beispielsweise Rohrstücke 13 oder Steinblöcke 14, angeordnet werden, um den Fischen während ihrer Ruhrphasen eine artgerechte Deckung anzubieten.

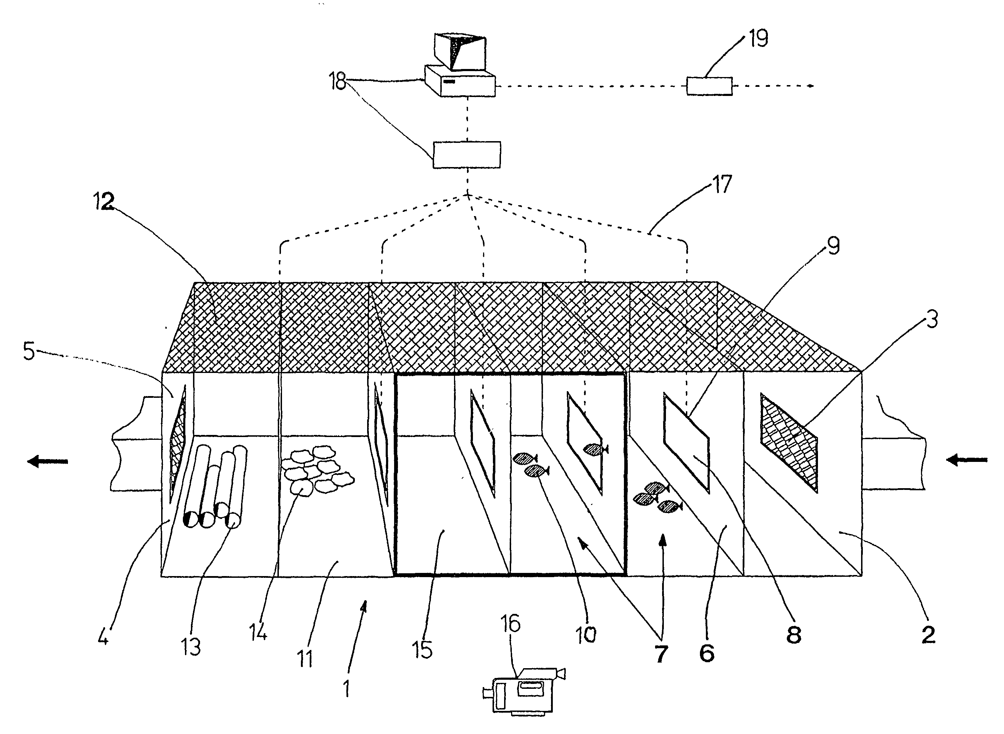

Während die jeweils äußeren beiden Sektionen 7 aus Gründen einer besseren Übersichtlichkeit in der Figur ohne Seitenwände dargestellt sind, werden die Seitenwände der beiden mittleren Sektionen 7 von einer großflächigen Glasscheibe 15 gebildet, um die Fische dort beobachten zu können. In diesem Bereich kann auch eine schematisch dargestellte Videokamera 16 auf den Behälter gerichtet sein, um eine visuelle Fernüberwachung des Behälters 1 bzw. der darin gehaltenen Fische 10 zu ermöglichen.

Jede der rahmenförmigen Antennen 9 ist über jeweils eine Leitung 17 mit einer Auswerteeinrichtung 18 verbunden, die z.B. einen PC enthält und mit den von Antennen 9 empfangenen Signalen eine Berechnung der Fischbewegungen durchführt. Aufgrund der individuellen Signale, die von jedem einzelnen Transponder, d.h. von jedem einzelnen der damit gekennzeichneten Fische, ausgelöst werden, ist für jeden einzelnen Fisch ein spezifisches Bewegungsmuster berechenbar. Aus der zeitlichen Abfolge der erfaßten Positionsdaten jedes Fisches, die bei jedem Durchschwimmen jeder Antenne 9 ausgelöst und von der Auswerteeinrichtung registriert wird, läßt sich aufgrund des bekannten Abstandes der Antenne 9 voneinander die mittlere Geschwindigkeit jedes Fisches und deren Verlauf über der Zeit bestimmen. Aus einer Zusammenschau der fortlaufend gespeicherten Bewegungsmuster jedes einzelnen Fisches läßt sich zu jedem Zeitpunkt eine mittlere Aktivität der gesamten in dem Behälter 1 befindlichen Fischpopulation bestimmen.

Im Verlauf ihres Lebens durchlaufen Fische Entwicklungsphasen, in denen sie einen gesteigerten Bewegungsdrang erkennen lassen. Diese Phasen umfassen insbesondere die Wanderzeiten, während derer Fische mehr oder weniger ausgedehnte Ortsbewegungen innerhalb der Fließgewässersysteme, oder aber, wie im Falle anadromer und katadromer Wanderfische, einen obligaten Wechsel zwischen Süßwasser und marinen Lebensräumen durchführen. Auslöser für den Wandertrieb der Fische sind neben einer Reihe von Umweltfaktoren wie das Abflußgeschehen, Veränderungen der Wassertemperatur oder den Mondphasen insbesondere endogene physiologische Faktoren, z.B. der Entwicklungsgrad der Fortpflanzungsorgane des Individuums. Aufgrund seiner hormonell gesteuerten Entwicklung nimmt zu unterschiedlichen Zeiten die Bereitschaft des Fisches zu, sein angestammtes Revier zu verlassen und im Gewässer umherzustreifen. Dabei trifft z.B. die Anwanderungsbereitschaft bei verschiedenen Fischarten in durchaus vollkommen unterschiedlichen Entwicklungsstadien auf, z.B. bei Aalen kurz vor der Geschlechtsreife, beim Lachs hingegen bei den ein- bis zweijährigen Jungfischen. Bevor der eigentliche Wandertrieb ausgelöst wird, lassen die zunehmend wanderstimmigen Individuen eine sogenannte "prämigratorische Unruhe" erkennen, die sich in einer Zunahme ihrer motorischen Aktivität und insbesondere über die Frequenz des Herumschwimmens äußert. Mittels einer Registrierung der Schwimmwege und -frequenzen kann die Phase der prämigratorischen Unruhe von Ruhephasen abgegrenzt werden, in denen der Fisch nicht wanderstimmig ist. Deshalb kann bei Überschreitung eines artspezifisch zu bestimmenden bestimmten Schwellenwertes der prämigratorischen Unruhe zuverlässig auf das Einsetzen von Wanderbewegungen geschlossen werden.

Vor Inbetriebnahme der beschriebenen Vorrichtung ist zunächst ein artspezifisches Referenzmuster, ein sogenanntes Ruhemuster während der Phasen zu bestimmen, in denen die Fische keine prämigratorische Unruhe zeigen. Dies muß unbedingt in einer Zeit erfolgen, die einen hinreichend großen zeitlichen Abstand von der Wanderzeit der betreffenden Fischart besitzt. Auch dürfen während der Zeit der Erfassung des Ruhemusters keine Störungen auf die im Behälter befindliche Fische einwirken, wie beispielsweise eine Fütterung oder eine Beunruhigung durch das Einbringen fischtoxischer Stoffe.

Wird während des späteren vollautomatischen Betriebs der Vorrichtung eine hinreichend große Abweichung des aktuellen Aktivitätsmusters der Fischbewegung von dem Ruhemuster festgestellt, so wird von der Auswerteeinrichtung 18 ein Signal abgegeben, das eine Wanderzeit der Fische anzeigt.

Dieses Signal kann beispielsweise mittels einer mit der Auswerteeinrichtung 18 verbundenen Übertragungseinrichtung 19, wie zum Beispiel einem Modem und dem Telefonnetz, an eine in der Figur nicht dargestellte zentrale Überwachungsstation weitergeleitet werden. Diese zentrale Überwachungsstation kann mit einer Mehrzahl der beschriebenen Überwachungsvorrichtungen, die an unterschiedlichen Stellen desselben Fließgewässers oder auch an verschiedenen Fließgewässern (desselben oder verschiedener Fließgewässersysteme) angeordnet sind, in Verbindung stehen. Auf diese Weise kann im Falle übereinstimmender Ergebnisse mehrerer Vorrichtungen die Zuverlässigkeit der Anzeige der Wanderzeiten weiter gesteigert werden.

Bei der Bestimmung der Wanderzeit mittels der Auswerteeinrichtung 18 werden vorzugsweise auch die Jahreszeit und die Mondphase berücksichtigt. Die Berücksichtigung kann beispielsweise in der Form erfolgen, daß zu bestimmen Konstellationen von Jahreszeit und Mondphase eine kleinere Abweichung des aktuellen Aktivitätsmusters von dem Ruhemuster ausreicht, um ein Signal zur Anzeige der Wanderzeit abzugeben. Des weiteren kann der Schwellwert der Abweichung der Aktivitätsmuster auch von der gemessenen Temperatur des Wasser in dem Fließgewässer, von dessen Sauerstoffgehalt und/oder pH-Wert sowie anderen chemischphysikalischen Parametern abhängig gemacht werden, um eine besonders große Zuverlässigkeit der Wanderzeitanzeige zu erreichen.

Die mittels des vorbeschriebenen Verfahrens erlangte Kenntnis von den Wanderzeiten der Fische kann insbesondere dazu genutzt werden, um die Betriebsweise von wassertechnischen Bauwerken, die sich in dem überwachten Fließgewässer befinden und den Wanderweg der Fische versperren bzw. gefährden, entsprechend zu beeinflussen. Damit nutzt das erfindungsgemäße Verfahren den Organismus "Fisch" im Sinne eines präzise arbeitenden und hoch sensiblen Meßgerätes, um den Zeitpunkt der Wanderung einer Fischart in einem Fließgewässersystem frühzeitig zu erkennen. Dies erfolgt mit Hilfe des Nachweises motorischer Aktivitätssteigerungen während der Phase der prämigratorischen Unruhe.

Eine Beeinflussung der wassertechnischen Bauwerke kann beispielsweise dadurch erfolgen, daß Wasserkraftwerke gedrosselt und Wehre abgesenkt werden. Auf diese Weise kann mit Hilfe einer vergleichsweise kurzfristigen Veränderung der Betriebsweise der Wasserkraftwerke bzw. -entnahmebauwerke während der in der Regel nicht allzu lang dauernden Wanderzeit der Fische eine sehr wirksame Verminderung deren Schädigung und Sterblichkeitsrate erreicht werden, deren Schädigung und Sterblichkeitsrate erreicht und unterbrochene Wanderwege im Sinne der Vernetzung von Lebensräumen wieder geöffnet werden.

Selbstverständlich läßt sich mit dem erfindungsgemäßen Verfahren bzw. der beschriebenen Vorrichtung auch das Ende der Wanderzeit bestimmen, das durch einen entsprechenden Rückgang der Aktivität der gehaltenen Fische gekennzeichnet ist. Die Maßnahmen zur Anpassung der Betriebsweise der Wasserkraftwerke können sodann wieder aufgehoben werden.

## Patentansprüche

1. Verfahren zur Ermittlung der Wanderzeiten von Fischen, während der die Fische aus einem Fließgewässersystem des Binnenlandes in Richtung des Meeres abwandern oder aus dem Meer in ein Fließgewässersystem aufsteigen, mit den folgenden Verfahrensmerkmalen:
a) Eine bestimmte Anzahl der Fische wird in einem abgegrenzten Wasservolumen gehalten, in dem sich diese artgerecht verhalten und aus dem diese nicht entweichen können.
b) Mit einer Erfassungseinrichtung wird die Position jedes Fisches wiederholt ermittelt.
c) Aus der zeitlichen Abfolge der Positionsdaten wird mittels einer mit der Erfassungseinrichtung verbundenen Auswerteeinrichtung periodisch ein aktuelles Aktivitätsmuster der Fischbewegungen berechnet und fortlaufend mit einem gespeicherten Ruhemuster verglichen, das während einer Nicht-Wanderphase der Fische artspezifisch bestimmt worden ist.
d) Im Fall einer hinreichend großen Abweichung des aktuellen Aktivitätsmusters von dem Ruhemuster wird von der Auswerteeinrichtung ein Signal abgegeben, das eine Wanderzeit anzeigt.

2. Verfahren nach Anspruch 1, **dadurch gekennzeichnet, daß** das Wasservolumen Wasser aus dem Fließgewässer enthält, für dessen zugehöriges Fließgewässersystem die Wanderzeiten ermittelt werden sollen.

3. Verfahren nach Anspruch 1 oder 2, **dadurch gekennzeichnet, daß** die in dem Wasservolumen gehaltenen Fische jeweils mit einem Erkennungselement versehen sind, das die natürliche Bewegung der Fische nicht einschränkt und die individuelle Erkennung jedes derart markierten Fisches erlaubt, wobei die Erfassungseinrichtung auf die Erkennungselemente abgestimmt ist.

4. Verfahren nach einem der Ansprüche 1 - 3, **dadurch gekennzeichnet, daß** das Wasservolumen von Wasser aus einem Fließgewässer, für dessen zugehöriges Fließgewässersystem die Wanderzeiten ermittelt werden sollen, durchströmt wird.

5. Verfahren nach Anspruch 4, **dadurch gekennzeichnet, daß** das Wasservolumen von einem Käfig begrenzt wird, der sich innerhalb des Strömungsquerschnitts eines Fließgewässers befindet, für dessen zugehöriges Fließgewässersystem die Wanderzeiten ermittelt werden sollen.

6. Verfahren nach einem der Ansprüche 1 bis 5, **dadurch gekennzeichnet, daß** als Erkennungselemente Transponder und als Erfassungseinrichtung eine Mehrzahl von Antennen verwendet werden.

7. Verfahren nach einem der Ansprüche 1 bis 5, **dadurch gekennzeichnet, daß** als Erkennungselemente Radiosender und als Erfassungseinrichtung mindestens eine Antenne verwendet wird.

8. Verfahren nach einem der Ansprüche 1 bis 5, **dadurch gekennzeichnet, daß** als Erkennungselemente äußerlich an jeweils einem Fisch befestigte Markierungen und optische Erfassungseinrichtungen verwendet werden.

9. Verfahren zur Ermittlung der Wanderzeiten von Fischen, während der die Fische aus einem Fließgewässersystem des Binnenlandes in Richtung des Meeres abwandern oder aus dem Meer in ein Fließgewässersystem aufsteigen, mit den folgenden Verfahrensmerkmalen:
a) Eine bestimmte Anzahl der Fische wird in einem abgegrenzten Wasservolumen gehalten, in dem sich diese artgerecht verhalten und aus dem diese nicht entweichen können.
b) In einem bestimmten Bereich des Wasservolumens wird die von Fischen hervorgerufene Schwerkraftwirkung mittels einer gravimetrisch arbeitenden Erfassungseinrichtung erfaßt.
c) Im Falle einer hinreichend großen Schwerkraftwirkung auf die Erfassungseinrichtung wird ein Signal abgegeben, das eine Wanderzeit anzeigt.

10. Verfahren nach einem der Ansprüche 1 bis 9, **dadurch gekennzeichnet, daß** von der Auswerteeinrichtung bei dem Berechnungsvorgang chemisch-physikalische Parameter des Wassers berücksichtigt werden, die mittels geeigneter Sensoren erfaßt werden.

11. Verfahren nach einem der Ansprüche 1 bis 10, **dadurch gekennzeichnet, daß** von der Auswerteeinrichtung bei dem Berechnungsvorgang die Jahreszeit und die Mondphase berücksichtigt werden.

12. Vorrichtung zur Ermittlung der Wanderzeiten von Fischen, während der die Fische aus einem Fließgewässersystem des Binnenlandes in Richtung des Meeres abwandern oder aus dem Meer in ein Fließgewässersystem aufsteigen, bestehend aus
a) einer ein Wasservolumen definierenden, in sich geschlossenen Abgrenzungseinrichtung, die für die Fische nicht durchdringbar ist und in der eine bestimmte Anzahl von Fischen derart unterbringbar ist, daß diese sich in artgerechter Weise verhalten können,
b) mindestens einer auf die physikalischen Eigenschaften der Fische abgestimmten Erfassungseinrichtung, mit der die Positionen der Fische in der Abgrenzungseinrichtung wiederholt ermittelbar sind,
c) einer mit der Erfassungseinrichtung verbindbaren Auswerteeinrichtung, mit der aus der zeitlichen Abfolge der Positionsdaten der Fische periodisch ein aktuelles Aktivitätsmuster der Fischbewegungen berechenbar ist, wobei fortlaufend zwischen dem aktuellen Aktivitätsmuster und einem Ruhemuster, das während einer Nicht-Wanderphase der Fische bestimmt worden ist, ein Vergleich durchführbar ist und wobei des weiteren von der Auswerteeinrichtung im Fall einer hinreichend großen Abweichung des aktuellen Aktivitätsmusters von dem Ruhemuster ein Signal abgebbar ist, das eine Wanderzeit anzeigt.

13. Vorrichtung nach Anspruch 12, **dadurch gekennzeichnet, daß** sie eine Anzahl von Erkennungselementen umfaßt, die der Anzahl der in der Abgrenzungseinrichtung untergebrachten Fische entspricht, wobei jedes Erkennungselement derart mit einem Fisch verbindbar ist, daß dieser in seiner natürlichen Bewegung nicht eingeschränkt ist, und daß die Erfassungseinrichtung auf die Erkennungselemente abgestimmt ist.

14. Vorrichtung nach Anspruch 12 oder 13, **dadurch gekennzeichnet, daß** die Abgrenzungseinrichtung ein Becken (1) ist, in dem sich Wasser aus einem Fließgewässer befindet, für dessen zugehöriges Fließgewässersystem die Wanderzeiten ermittelt werden sollen.

15. Vorrichtung nach Anspruch 14, **dadurch gekennzeichnet, daß** sich das Becken (1) in der Nähe eines Fließgewässers befindet, für dessen zugehöriges Fließgewässersystem die Wanderzeiten ermittelt werden sollen, und ständig von Wasser dieses Fließgewässers durchströmbar ist.

16. Vorrichtung nach Anspruch 12 oder 13, **dadurch gekennzeichnet, daß** die Abgrenzungseinrichtung ein Käfig ist, der innerhalb des Strömungsquerschnitts eines Fließgewässers angeordnet ist, für dessen zugehöriges Fließgewässersystem die Wanderzeiten ermittelt werden sollen.

17. Vorrichtung nach einem der Ansprüche 12 bis 16, **dadurch gekennzeichnet, daß** die Erkennungselemente Transponder und die Erfassungseinrichtung Antennen (9) sind.

18. Vorrichtung nach Anspruch 17, **dadurch gekennzeichnet, daß** die Antennen (9) jeweils eine Umrandung einer Öffnung (8) bilden und so innerhalb der Abgrenzungseinrichtung angeordnet sind, daß die Öffnungen (8) von den Fischen durchschwimmbar sind.

19. Vorrichtung nach Anspruch 18, **dadurch gekennzeichnet, daß** sich die Öffnungen (8) innerhalb von Trennelementen (6) befinden, die das von der Abgrenzungseinrichtung definierte Wasservolumen in mehrere Teilvolumina unterteilen.

20. Vorrichtung nach Anspruch 17, **dadurch gekennzeichnet, daß** die Antennen außerhalb der Abgrenzungseinrichtung angeordnet sind.

21. Vorrichtung nach einem der Ansprüche 12 bis 16, **dadurch gekennzeichnet, daß** die Erkennungselemente Radiosender sind und/oder die Erfassungseinrichtung mindestens eine Antenne ist.

22. Vorrichtung nach einem der Ansprüche 12 bis 16, **dadurch gekennzeichnet, daß** die Erkennungselemente äußerlich an jedem Fisch befestigte Markierungen sind und/oder eine optische Erfassungseinrichtung vorgesehen ist.

23. Vorrichtung nach Anspruch 22, **dadurch gekennzeichnet, daß** die optische Erfassungseinrichtung eine Videokamera oder eine Fotozelle ist.

24. Vorrichtung nach einem der Ansprüche 12 bis 16, **dadurch gekennzeichnet, daß** die Erfassungseinrichtung einen Kondensator enthält, mit dem die durch die Fischbewegungen verursachten Änderungen des elektrischen Feldes meßbar sind.

25. Vorrichtung nach einem der Ansprüche 12 bis 16, **dadurch gekennzeichnet, daß** die Erfassungseinrichtung Schaltkontakte umfaßt, die durch sich bewegende Fische auslösbar sind.

26. Vorrichtung nach Anspruch 25, **dadurch gekennzeichnet, daß** die Schaltkontakte kapazitive Näherungsschalter und/oder mechanische Mikroschalter sind.

27. Vorrichtung zur Ermittlung der Wanderzeiten von Fischen, während der die Fische aus einem Fließgewässersystem des Binnenlandes in Richtung des Meeres abwandern oder aus dem Meer in ein Fließgewässersystem aufsteigen, bestehend aus
a) einer ein Wasservolumen definierenden, in sich geschlossenen Abgrenzungseinrichtung, die für die Fische nicht durchdringbar ist und in der eine bestimmte Anzahl von Fischen derart unterbringbar ist, daß diese sich in artgerechter Weise verhalten können,
b) einer in einem bestimmten Bereich des Wasservolumens angeordnete und gravimetrisch arbeitenden Erfassungseinrichtung zur Erfassung der durch die Fische hervorgerufenen Schwerkraftwirkung, wobei von der Erfassungseinrichtung im Falle einer hinreichend großen Schwerkraftwirkung ein Signal abgebbar ist, das eine Wanderzeit anzeigt.

## Claims

1. A method for determining the migrating periods of fish, during which the fish migrate down from an inland flowing water system in the direction towards the sea or migrate up from the sea to a flowing water system, comprising the following method features:
a) a certain number of fish are held in a delimited volume of water in which they behave like wild fish and are unable to escape from the same;
b) the position of each fish is determined repeatedly with a detection device;
c) a current activity pattern of the movement of the fish is calculated from the time sequence of the positional data by means of an evaluation device connected with the detection device and said activity pattern is compared continually with a stored resting pattern which has been determined specific to the species during the non-migratory phases of the fish;
d) a signal is emitted by the evaluation device in the case of a sufficiently large deviation of the current activity pattern from the resting pattern, which signal indicates a migrating period.

2. A method as claimed in claim 1, **characterized in that** the water volume contains water from the flowing water for whose associated flowing water system the migrating periods are to be determined.

3. A method as claimed in claim 1 or 2, **characterized in that** the fish held in the water volume are each provided with an identification element which does not limit the natural movement of the fish and allows the individual recognition of each fish thus marked, with the detection device being adjusted to the identification elements.

4. A method as claimed in one of the claims 1 to 3, **characterized in that** the water volume is flowed through by water from a flowing water for whose associated flowing water system the migrating periods are to be determined.

5. A method as claimed in claim 4, **characterized in that** the water volume is delimited by a cage which is situated within the flow cross section of a flowing water for whose associated flowing water system the migrating periods are to be determined.

6. A method as claimed in one of the claims 1 to 5, **characterized in that** transponders are used as identification elements and a plurality of antennas are used as a detection device.

7. A method as claimed in one of the claims 1 to 5, **characterized in that** radio transmitters are used as identification elements and at least one antenna is used as a detection device.

8. A method as claimed in one of the claims 1 to 5, **characterized in that** markings outwardly fastened to each fish are used as identification elements and optical detection devices are used.

9. A method for determining the migrating periods of fish, during which the fish migrate down from an inland flowing water system in the direction towards the sea or migrate up from the sea to a flowing water system, comprising the following method features:
a) a certain number of fish are held in a delimited volume of water in which they behave like wild fish and are unable to escape from the same;
b) the gravitational effect produced by fish in a certain region of the water volume is detected by means of a detection device operating in a gravimetric manner;
c) a signal indicating the migration period is emitted in the case of a sufficiently large gravitational effect on the detection device.

10. A method as claimed in one of the claims 1 to 9, **characterized in that** chemico-physical parameters of the water are considered by the evaluation device in the calculation process, which parameters are detected by means of suitable sensors.

11. A method as claimed in one of the claims 1 to 10, **characterized in that** the season and the moon phase are taken into account by the evaluation device in the calculation process.

12. A method for determining the migrating periods of fish, during which the fish migrate down from an inland flowing water system in the direction towards the sea or migrate up from the sea to a flowing water system, consisting of:
a) an inherently closed delimitation device which defines the water volume and cannot be penetrated by the fish and in which a certain number of fish can be housed in such a way that they can act like wild fish;
b) at least one detection device which is adjusted to the physical properties of the fish and with which the positions of the fish in the delimitation device can be determined repeatedly;
c) an evaluation device which can be connected with the detection device and with which a current activity pattern of the movements of the fish can be calculated periodically from the time sequence of the positional data of the fish, with a comparison being performable in a continual manner between the current activity patter and the resting pattern which has been determined during a non-migratory phase of the fish and with further a signal indicative of a migration period being emittable by the evaluation device in the case of a sufficiently large deviation of the current activity pattern from the resting pattern.

13. An apparatus as claimed in claim 12, **characterized in that** it comprises a number of identification elements which corresponds to the number of fish housed in the delimitation device, with each identification element being connectable with a fish in such a way that the same is not obstructed in its natural movements and that the detection device is adjusted to the identification elements.

14. An apparatus as claimed in claim 12 or 13, **characterized in that** the delimitation device is a pool (1) which contains water from a flowing water for whose associated flowing water system the migrating periods are to be determined.

15. An apparatus as claimed in claim 14, **characterized in that** the pool (1) is situated in the vicinity of a flowing water for whose associated flowing water system the migrating periods are to be determined and can be flowed through continually by the water of said flowing water.

16. An apparatus as claimed in claim 12 or 13, **characterized in that** the delimitation device is a cage which is situated within the flow cross section of a flowing water for whose associated flowing water system the migrating periods are to be determined.

17. An apparatus as claimed in one of the claims 12 to 16, **characterized in that** the identification elements are transponders and the detection devices are antennas (9).

18. An apparatus as claimed in claim 17, **characterized in that** the antennas (9) each form a bordering of an opening (8) and are arranged within the delimitation device in such a way that the openings (8) can be swum through by the fish.

19. An apparatus as claimed in claim 18, **characterized in that** the openings (8) are situated within separating elements (6) which subdivide the water volume defined by the delimitation device into several partial volumes.

20. An apparatus as claimed in claim 17, **characterized in that** the antennas are arranged outside of the delimitation device.

21. An apparatus as claimed in one of the claims 12 to 16, **characterized in that** the identification elements are radio transmitters and/or the detection devices are at least one antenna.

22. An apparatus as claimed in one of the claims 12 to 16, **characterized in that** the identification elements are markings which are attached externally to the fish and/or an optical detection device is provided.

23. An apparatus as claimed in claim 22, **characterized in that** the optical detection device is a video camera or a photoelectric cell.

24. An apparatus as claimed in one of the claims 12 to 16, **characterized in that** the detection device comprises a capacitor with which it is possible to measure changes in the electric field which are caused by the movements of the fish.

25. An apparatus as claimed in one of the claims 12 to 16, **characterized in that** the detection device comprises switching contacts which can be triggered by moving fish.

26. An apparatus as claimed in claim 25, **characterized in that** the switching contacts are capacitative proximity switches and/or mechanical microswitches.

27. An apparatus for determining the migrating periods of fish, during which the fish migrate down from an inland flowing water system in the direction towards the sea or migrate up from the sea to a flowing water system, consisting of:
a) an inherently closed delimitation device which defines the water volume and cannot be penetrated by the fish and in which a certain number of fish can be housed in such a way that they can act like wild fish;
b) a detection device arranged in a certain region of the water volume and working in a gravimetric manner for the purpose of detecting the gravitational effect caused by the fish, with a signal indicative of a migration period being emittable by the detection device in the case of a sufficiently large gravitational effect.

## Revendications

1. Procédé pour déterminer les périodes de migration de poissons pendant lesquelles les poissons migrent d'un réseau fluvial à l'intérieur des terres vers la mer ou de la mer vers un réseau fluvial à l'intérieur des terres, présentant les caractéristiques suivantes:
a) un certain nombre de poissons est retenu dans un volume d'eau délimité dans lequel ils peuvent se comporter de manière normale pour leur espèce et duquel ils ne peuvent pas s'échapper ;
b) un dispositif de détection détermine de façon répétée la position de chaque poisson ;
c) à partir de la succession temporelle des données de position, un dispositif d'interprétation relié au dispositif de détection calcule périodiquement un modèle d'activité actuel des déplacements des poissons et le compare de façon continue avec un modèle de repos mémorisé qui a été déterminé de manière spécifique de l'espèce pendant une phase de non-migration des poissons ;
d) lorsque le modèle d'activité actuel diffère suffisamment du modèle de repos, l'installation d'interprétation émet un signal qui indique une période de migration.

2. Procédé selon la revendication 1, **caractérisé en ce que** le volume d'eau contient de l'eau du cours d'eau pour le réseau fluvial duquel les périodes de migration doivent être déterminées.

3. Procédé selon la revendication 1 ou 2, **caractérisé en ce que** les poissons retenus dans le volume d'eau sont dotés chacun d'un élément de reconnaissance qui ne limite pas leurs mouvements naturels et permet l'identification individuelle de chaque poisson ainsi marqué, le dispositif de détection étant adapté aux éléments de reconnaissance.

4. Procédé selon l'une quelconque des revendications 1 à 3, **caractérisé en ce que** le volume d'eau est traversé par l'eau d'un cours d'eau pour le réseau fluvial duquel les périodes de migration doivent être déterminées.

5. Procédé selon la revendication 4, **caractérisé en ce que** le volume d'eau est délimité par une cage qui se trouve dans la section d'écoulement d'un cours d'eau pour le réseau fluvial duquel les périodes de migration doivent être déterminées.

6. Procédé selon l'une quelconque des revendications 1 à 5, **caractérisé en ce que** les éléments de reconnaissance utilisés sont des transpondeurs et le dispositif de détection est une pluralité d'antennes..

7. Procédé selon l'une quelconque des revendications 1 à 5, **caractérisé en ce que** les éléments de reconnaissance utilisés sont des émetteurs radio et le dispositif de détection est au moins une antenne.

8. Procédé selon l'une quelconque des revendications 1 à 5, **caractérisé en ce que** les éléments de reconnaissance utilisés sont des marquages apposés extérieurement sur chaque poisson et des dispositifs de détection optiques sont utilisés.

9. Procédé pour déterminer les périodes de migration de poissons pendant lesquelles les poissons migrent d'un réseau fluvial à l'intérieur des terres vers la mer ou de la mer vers un réseau fluvial à l'intérieur des terres, présentant les caractéristiques suivantes :
a) un certain nombre de poissons est retenu dans un volume d'eau délimité dans lequel ils peuvent se comporter de manière normale pour leur espèce et duquel ils ne peuvent pas s'échapper ;
b) dans une zone donnée du volume d'eau, la force de gravité produite par les poissons est détectée au moyen d'un dispositif de détection gravimétrique ;
c) lorsque l'action de la gravité exercée sur le dispositif de détection est suffisamment forte, un signal est émis pour signaler une période de migration.

10. Procédé selon l'une quelconque des revendications 1 à 9, **caractérisé en ce que** le dispositif d'interprétation prend en compte lors du calcul des paramètres physico-chimiques de l'eau détectés au moyen de capteurs appropriés.

11. Procédé selon l'une quelconque des revendications 1 à 10, **caractérisé en ce que** le dispositif d'interprétation prend en compte lors du calcul la saison et la phase de la lune.

12. Dispositif pour déterminer les périodes de migration de poissons pendant lesquelles les poissons migrent d'un réseau fluvial à l'intérieur des terres vers la mer ou de la mer vers un réseau fluvial à l'intérieur des terres, composé des éléments suivants :
a) un dispositif de délimitation fermé sur lui-même et infranchissable pour les poissons, définissant un volume d'eau et dans lequel un certain nombre de poissons peut être contenu de telle manière qu'ils puissent se comporter de manière normale pour leur espèce ;
b) au moins un dispositif de détection adapté aux propriétés physiques des poissons, qui permet de déterminer les positions des poissons dans le dispositif de délimitation ;
c) un dispositif d'interprétation pouvant être relié au dispositif de détection, qui peut calculer périodiquement à partir de la séquence temporelle des données de position des poissons un modèle d'activité actuel des mouvements des poissons, en comparant en continu le modèle d'activité actuel et un modèle de repos déterminé pendant une phase de non-migration des poissons, et le dispositif d'interprétation pouvant en outre, lorsque le modèle d'activité actuel est suffisamment différent du modèle de repos, émettre un signal indiquant une période de migration.

13. Dispositif selon la revendication 12, **caractérisé en ce qu'**il comporte un nombre d'éléments de reconnaissance correspondant au nombre de poissons contenus dans le dispositif de délimitation, chaque élément de reconnaissance pouvant être relié à un poisson de telle manière que celui-ci ne soit pas gêné dans ses mouvements naturels, et **en ce que** le dispositif de détection est adapté aux éléments de reconnaissance.

14. Dispositif selon la revendication 12 ou 13, **caractérisé en ce que** le dispositif de délimitation est un bassin (1) dans lequel se trouve de l'eau d'un cours d'eau pour le réseau fluvial duquel les périodes de migration doivent être déterminées.

15. Dispositif selon la revendication 14, **caractérisé en ce que** le bassin (1) se trouve à proximité d'un cours d'eau pour le réseau fluvial duquel les périodes de migration doivent être déterminées et peut être parcouru en permanence par l'eau de ce cours d'eau.

16. Dispositif selon la revendication 12 ou 13, **caractérisé en ce que** le dispositif de délimitation est une cage disposée dans la section d'écoulement d'un cours d'eau pour le réseau fluvial duquel les périodes de migration doivent être déterminées.

17. Dispositif selon l'une quelconque des revendications 12 à 16, **caractérisé en ce que** les éléments de détection sont des transpondeurs et les éléments de détection des antennes (9).

18. Dispositif selon la revendication 17, **caractérisé en ce que** les antennes (9) bordent une ouverture (8) et sont disposées à l'intérieur du dispositif de délimitation de telle sorte que les poissons puissent passer par les ouvertures (8).

19. Dispositif selon la revendication 18, **caractérisé en ce que** les ouvertures (8) se trouvent à l'intérieur d'éléments de séparation (6) qui partagent le volume d'eau défini par le dispositif de délimitation en plusieurs sous-volumes.

20. Dispositif selon la revendication 17, **caractérisé en ce que** les antennes se trouvent à l'extérieur du dispositif de délimitation

21. Dispositif selon l'une quelconque des revendications 12 à 16, **caractérisé en ce que** les éléments de reconnaissance sont des émetteurs radio et (ou) le dispositif de détection est au moins une antenne.

22. Dispositif selon l'une quelconque des revendications 12 à 16, **caractérisé en ce que** les éléments de reconnaissance sont des marquages apposés extérieurement sur chaque poisson et (ou) il est prévu un dispositif de détection optique.

23. Dispositif selon la revendication 22, **caractérisé en ce que** le dispositif de détection optique est une caméra vidéo ou une cellule photo-électrique.

24. Dispositif selon l'une quelconque des revendications 12 à 16, **caractérisé en ce que** le dispositif de détection contient un condensateur qui permet de mesurer les modifications du champ électrique provoquées par les déplacements des poissons.

25. Dispositif selon l'une quelconque des revendications 12 à 16, **caractérisé en ce que** le dispositif de détection comprend des contacts de commutation pouvant être déclenchés par les poissons qui se déplacent.

26. Dispositif selon la revendication 25, **caractérisé en ce que** die les contacts de commutation sont des détecteurs de proximité capacitifs et (ou) des microrupteurs mécaniques.

27. Dispositif pour déterminer les périodes de migration de poissons pendant lesquelles les poissons migrent d'un réseau fluvial à l'intérieur des terres vers la mer ou de la mer vers un réseau fluvial à l'intérieur des terres, composé des éléments suivants :
a) un dispositif de délimitation fermé sur lui-même et infranchissable pour les poissons, définissant un volume d'eau et dans lequel un certain nombre de poissons peut être contenu de telle manière qu'ils puissent se comporter de manière normale pour leur espèce;
b) un dispositif de détection disposé dans une certaine zone du volume d'eau et fonctionnant par gravimétrie pour la détection de la gravité exercée par les poissons, le dispositif de détection pouvant, lorsque la force de gravité est suffisamment forte, émettre un signal indiquant une période de migration.
